# EUROPÄISCHE PATENTSCHRIFT

(11) **EP 1 975 405 B1**
(45) Veröffentlichungstag und Bekanntmachung des Hinweises auf die Patenterteilung: **31.10.2018**
(21) Anmeldenummer: 08004095.9
(22) Anmeldetag: 05.03.2008
(51) Int. Cl.: F03D 80/00, F03D 13/20

(54) **Verbindung von Bauteilen einer Windenergieanlage, Verwendung sowie Verfahren**
Connection of elements of a wind turbine plant, use thereof and method
Raccordement des éléments d'une installation d'énergie éolienne, utilization et procédé

(30) Priorität: 26.03.2007 DE 102007014860
(43) Veröffentlichungstag der Anmeldung: 01.10.2008
(73) Patentinhaber: Senvion GmbH, 22297 Hamburg (DE)
(72) Erfinder: Eusterbarkey, Carsten, 25813 Simonsberg (DE)
(74) Vertreter: Wallinger Ricker Schlotter Tostmann

(56) Entgegenhaltungen:
- EP-A1- 1 302 685
- DE-A1- 10 119 427
- DE-T2- 69 114 016
- DE-U1- 8 625 580
- US-A- 1 523 296
- US-A1- 2006 055 174

## Beschreibung

Die Erfindung betrifft eine Verbindung von Bauteilen einer Windenergieanlage mit einem Durchmesser von mehr als 0,5 m, vorzugsweise mehr als 1,0 m, weiter vorzugsweise mehr als 1,5 m, wobei zwei miteinander zu verbindende Bauteile jeweils einander zugewandte Kontaktflächen aufweisen und im verbundenen Zustand die Bauteile miteinander verspannt sind oder werden.

Darüber hinaus betrifft die Erfindung eine Verwendung oder eine Anordnung bei wenigstens einer Verbindung einer Windenergieanlage, ein Verfahren zum Herstellen einer Verbindung von Bauteilen einer Windenergieanlage sowie eine Windenergieanlage.

Im Stand der Technik ist beispielsweise unter der Bezeichnung "5M" eine Windenergieanlage der Patentanmelderin bekannt, die eine Nennleistung von 5 Megawatt (MW) besitzt.

Um großvolumige Bauteile einer Windenergieanlage bei der Errichtung, Wartung oder bei der Reparatur miteinander zu verbinden, sind Flanschverbindungen bzw. Schraubverbindungen zwischen den Bauteilen vorgesehen. Derartige Bauteile, die miteinander verbunden werden, sind beispielsweise die Rotorwelle und der Getriebeeingang sowie die Rotornabe und die Rotorwelle.

Darüber hinaus werden Schraubverbindungen bei der Verbindung des Rohrturms mit dem Drehlager sowie des Maschinenträgers einer Windenergieanlage mit weiteren Bestandteilen einer Windenergieanlage vorgesehen, insbesondere die Verbindung zum Rotorlager, der Getriebeaufhängung, dem Achszapfen und dem (Ring-)Generator.

Überdies offenbart DE-A-101 19 427 eine Kopplungsvorrichtung für eine Windkraftanlage mit einer mindestens ein Rotorblatt der Windkraftanlage tragenden Rotorwelle, einer Getriebewelle und einer die Rotorwelle an die Getriebewelle koppelnden Kopplungseinrichtung. Die Kopplungsvorrichtung selbst weist ein mit einem zur Herstellung einer formschlüssigen Verbindung ausgelegten Befestigungselement lösbar an der Rotornabe befestigtes Verbindungselement und ein zur Herstellung einer reibschlüssigen Verbindung zwischen dem Verbindungselement einerseits und einem weiteren Verbindungselement und/oder der Getriebewelle andererseits ausgelegtes Kopplungselement auf.

Ferner ist in DE-C-100 11 464 eine Lagerung eines verstellbaren Rotorblatts einer Windenergieanlage offenbart. Hierbei ist ein Wälzlager für die Übertragung hoher Axialkräfte und großer Biegemomente vorgesehen. Hierbei ist an einem Nabenstutzen ein Rotorblatt mit Hilfe eines Lagers um die Rotorblattlängsachse verschwenkbar gelagert. Das Lager hat einen äußeren Lagerring, einen zweiten Lagerring und einen zwischen den Lagerringen angeordneten dritten Lagerring. Zwischen den Lagerringen einerseits sowie zwischen den Lagerringen andererseits sind Reihen von Kugeln angeordnet. Der äußere und der innere Lagerring sind mit den Teilschalen des Rotorblatts verbunden. Der dritte Lagerring ist mit dem Nabenstutzen verbunden.

Außerdem offenbart DE-A-195 10 182 eine Wälzlager-Drehverbindung einer Windkraftanlage, wobei Laufringe und zwischen diesen Laufringen abrollende Wälzkörper vorgesehen sind. Die Laufringe sind mittels Schraubverbindungen mit einer Anschlusskonstruktion derart verbunden, dass eine Befestigungsschraube in einer Bohrung der Anschlusskonstruktion geführt ist.

Ausgehend von diesem Stand der Technik besteht die Aufgabe der Erfindung darin, die Verbindung von großvolumigen Bauteilen einer Windenergieanlage zu verbessern, wobei es möglich sein soll, die Tragfähigkeit hochbelasteter Schraubverbindungen oder dergleichen zu erhöhen.

Die Aufgabe wird gelöst durch eine Verbindung von Bauteilen einer Windenergieanlage mit einem Durchmesser von mehr als 0,5 m, vorzugsweise mehr als 1,0 m, weiter vorzugsweise mehr als 1,5 m, wobei zwei miteinander zu verbindende Bauteile jeweils einander zugewandte Kontaktflächen aufweisen und im verbundenen Zustand die Bauteile miteinander verspannt sind oder werden, die dadurch weitergebildet wird, dass ein zweites Bauteil als Zwischenverbindungsteil zwischen dem ersten Bauteil und einem dritten Bauteil angeordnet ist oder wird, wobei eine kraftschlüssige Verbindung zwischen dem ersten und dem dritten Bauteil mit dem dazwischen angeordneten zweiten Bauteil ausgebildet ist, wobei die Oberflächen der Kontaktflächen des zweiten Bauteils jeweils eine höhere Härte und Rauigkeit als die Oberflächen der den Kontaktflächen des zweiten Bauteils gegenüberliegenden Kontaktflächen des ersten und des dritten Bauteils aufweisen, wobei die Oberflächen der Kontaktflächen des ersten und des dritten Bauteils der Windenergieanlage weicher sind als die Oberflächen der Kontaktflächen eines zweiten Bauteils der Windenergieanlage, wobei die Oberflächen der Kontaktflächen des zweiten Bauteils gehärtet sind.

Dadurch, dass die Oberflächen der Kontaktflächen des ersten und des dritten Bauteils weich sind und somit die Oberflächen der Kontaktflächen des zweiten Bauteils härter als die Oberflächen der Kontaktflächen des ersten und des dritten Bauteils sind, wird eine lösbare Verbindung von mechanisch hochbelasteten Komponenten bzw. Bauteilen einer Windenergieanlage erreicht, die gegenüber den bisher bekannten Verbindungen von Bauteilen einer Windenergieanlage höhere Reibwerte aufweist.

Durch entsprechende Verbindungselemente bzw. Schrauben oder dergleichen wird eine Vorspannung zwischen den zu verbindenden bzw. verbundenen Bauteilen erzeugt bzw. ausgebildet, so dass eine kraftschlüssige Verbindung zwischen den Bauteilen erreicht wird. Dabei wird zwischen den beiden Bauteilen eine reibwerterhöhte Kopplung der Bauteile durch die über die Verbindungselemente aufgebrachte Vorspannung aufgrund einer beim Fügevorgang erzeugten mikro-plastischen Verformung der Kontaktflächen erzielt, wodurch höhere Reibwerte der Verbindung erreicht werden.

Dies ist insbesondere bei der Anwendung von Windenergieanlagen bzw. Errichtung von Windenergieanlagen wichtig, da beispielsweise die Windenergieanlage unter sehr ungünstigen Montage- und Reparaturbedingungen errichtet bzw. repariert wird. Durch die erfindungsgemäße Verbindung ist es möglich, tonnenschwere, teilweise verschmutzte oder verölte Bauteile in Höhen von bis zu 120 m auch bei ungünstigen Wetterbedingungen, wie z.B. Schnee, Eis oder Regen, miteinander zu verbinden, mit einer mechanisch hochbelasteten Verbindung zwischen den Bauteilen, wobei gleichzeitig durch die Ausbildung einer reibwerterhöhten Verbindung zwischen den Kontaktflächen die Tragfähigkeit der Bauteile der Verbindung erhöht wird bzw. ist.

Im Rahmen der Erfindung bedeutet das Merkmal "gehärtet" oder "härtere Oberfläche" eines Bauteils, dass ein Bauteil aus naturhartem Werkstoff, z.B. Vergütungsstahl, mit einer dadurch bereits vorhandenen härteren Oberfläche durch die Produktion hergestellt ist als auch dass ein bereits gefertigtes Bauteil in Bearbeitungsschritten gemäß einem bevorzugten Härtungsprozess mit einer härteren Oberfläche versehen wird.

Im Rahmen der Erfindung wird unter einer Verbindung insbesondere eine Flanschverbindung von Bauteilen verstanden. Ferner wird im Rahmen der Erfindung unter einem Bauteil insbesondere eine Funktionsgruppe oder Systemgruppe bzw. eine Funktionseinheit oder Systemeinheit einer Windenergieanlage, z.B. eine Rotornabe, eine Rotorwelle, ein Getriebe, verstanden, die mit einer anderen Funktions-/Systemgruppe oder Funktions-/Systemeinheit der Anlage über die erfindungsgemäße Verbindung, insbesondere Schraubverbindung bzw. Flanschverbindung, mechanisch gekoppelt ist oder wird. Insbesondere handelt es sich bei den Bauteilen oder Funktionseinheiten oder Systemeinheiten um großvolumige Bauteile mit Gewichten von mehr als 100 kg bis hin zu mehreren Tonnen.

Darüber hinaus zeichnet sich die Verbindung dadurch aus, dass die Oberfläche der Kontaktfläche des zweiten Bauteils eine höhere Rauigkeit als die Oberfläche der Kontaktfläche des ersten Bauteils aufweist. Hierdurch wird die mikroplastische Verformung in der weichen Oberfläche der Kontaktflächen des ersten Bauteils verbessert. Insgesamt wird dadurch der Kraftschluss der zu verbindenden Bauteile einer Windenergieanlage erhöht.

Insbesondere zeichnet sich weiterhin die Verbindung dadurch aus, dass der Reibschluss zwischen dem ersten und dem zweiten Bauteil im Vergleich zu einer Verbindung des ersten und zweiten Bauteils ohne gehärtete Oberfläche erhöht ist oder wird. Dadurch wird eine lösbare Verbindung mit hohen Reibwerten zwischen den Kontaktflächen der zu verbindenden Bauteile erreicht, wobei bei einer Wartung der Windenergieanlage bzw. der Bauteile der Windenergieanlage die gelöste Verbindung zwischen den Bauteilen nach einer Demontage anschließend beim Zusammenbau wieder eine Verbindung zwischen den Bauteilen mit einem hohen Reibschluss gewährleistet wird.

Dadurch, dass das zweite Bauteil als Zwischenverbindungsteil oder Zwischenverbindungsbauteil zwischen dem ersten Bauteil und einem dritten Bauteil angeordnet ist oder wird, wird eine kraftschlüssige Verbindung zwischen dem ersten und dem dritten Bauteil mit einem dazwischen angeordneten zweiten Bauteil ermöglicht.

Gemäß der Erfindung ist vorgesehen, dass die Oberflächen der Kontaktflächen des zweiten Bauteils jeweils eine höhere Härte und Rauigkeit als die Oberflächen der den Kontaktflächen des zweiten Bauteils gegenüberliegenden Kontaktflächen des ersten und dritten Bauteils aufweisen.

Insbesondere ist es dadurch möglich, dass der Reibschluss zwischen dem dritten und dem zweiten Bauteil im Vergleich zu einer Verbindung des dritten und zweiten Bauteils ohne gehärtete Oberfläche erhöht ist oder wird.

Vorzugsweise sind das erste und das dritte Bauteil mittels einer Flanschverbindung oder eines Flansches miteinander verbunden.

Vorteilhafterweise sind oder werden durch Verbindungselemente, vorzugsweise Schrauben oder dergleichen, z.B. Bolzen, das erste und das zweite Bauteil vorgespannt, so dass eine kraftschlüssige Verbindung zwischen dem ersten und dem zweiten Bauteil einer Windenergieanlage ausgebildet wird. Alternativ sind oder werden durch Verbindungselemente, vorzugsweise Schrauben, Bolzen oder dergleichen, das erste und das dritte Bauteil vorgespannt.

Darüber hinaus wird in einer Weiterbildung vorgeschlagen, dass das Zwischenverbindungsteil bzw. -bauteil, das als zweites Bauteil zwischen dem ersten und dem dritten Bauteil angeordnet ist oder wird, von den Verbindungselementen durchsetzt ist oder wird.

Hierbei ist es bevorzugt, wenn das Zwischenverbindungsteil bzw. -bauteil aus mehreren, insbesondere plattenförmig oder klötzchenartig ausgebildeten, Verbindungszwischenkörpern besteht oder diese aufweist. Dazu ist in einer Ausgestaltung weiter vorgesehen, dass die Verbindungszwischenkörper bei oder durch Anordnung zwischen dem ersten und dem dritten Bauteil eine Art segmentierten Ring, insbesondere segmentierten Kreisring, oder Teile davon bilden.

Bevorzugterweise sind oder werden die Verbindungszwischenkörper mit dem ersten und/oder dem zweiten Bauteil mechanisch mittels Montierelementen, insbesondere Schrauben oder Stifte oder Klammern oder dergleichen, verbunden.

Gemäß einer weiteren Ausführungsform sind die Kontaktflächen des ersten und/oder des zweiten Bauteils und/oder des dritten Bauteils ringartig und/oder geschlossen ausgebildet oder angeordnet.

Außerdem ist es bevorzugt, dass die Verbindung bzw. der Reibschluss zwischen den Bauteilen einen Reibwert von mehr als 0,4, vorzugsweise mehr als 0,5, insbesondere mehr als 0,6, aufweist.

Insbesondere ist das erste Bauteil als Rotorwelle ausgebildet.

Sofern die Verbindung aus einer Rotorwelle (erstes Bauteil) und einer Rotornabe (drittes Bauteil) besteht, wobei zwischen dem ersten und dem dritten Bauteil ein Zwischenverbindungsteil (zweites Bauteil) angeordnet ist, wird hierdurch eine dreiteilige Verbindung bereitgestellt. Hierbei ist das dritte Bauteil als Rotornabe oder als Getriebeeingangswelle ausgebildet.

In einer Alternative ist das erste Bauteil als Maschinenrahmen oder Rohrturm ausgebildet. Hierzu ist weiter vorgesehen, dass das dritte Bauteil als Drehlager, das auf dem Rohrturm angeordnet ist oder wird, ausgebildet ist.

Vorteilhafterweise ist die Verbindung als kraftschlüssige, insbesondere lösbare, Verbindung, insbesondere querkraftbelastete und/oder torsionsbelastete Verbindung oder Schraubverbindung, ausgebildet.

Vorzugsweise handelt es sich bei dem ersten oder dritten Bauteil um ein Gussbauteil, vorzugsweise mit (Anschluss-)Durchmessern von 0,5 m bis 1 m.

Darüber hinaus wird die Aufgabe gelöst durch die Verwendung oder die Anordnung von Bauteilen bei wenigstens einer voranstehend beschriebenen Verbindung von zwei Bauteilen einer Windenergieanlage. Hierdurch wird eine dreiteilige Verbindung ausgebildet. Zur Vermeidung von Wiederholungen wird auf die vorangehenden Ausführungen ausdrücklich verwiesen.

Eine weitere Lösung der Aufgabe erfolgt mittels eines Verfahrens zum Herstellen einer Verbindung von Bauteilen einer Windenergieanlage, wobei eine Verbindung nach einem der voranstehenden Ausführungsbeispiele ausgebildet wird.

Außerdem wird die Aufgabe gelöst durch eine Windenergieanlage, die mit einer voranstehend beschriebenen Verbindung ausgebildet ist.

Die Erfindung wird nachstehend ohne Beschränkung des allgemeinen Erfindungsgedankens anhand von Ausführungsbeispielen unter Bezugnahme auf die Zeichnungen exemplarisch beschrieben, wobei bezüglich aller im Text nicht näher erläuterten erfindungsgemäßen Einzelheiten ausdrücklich auf die Zeichnungen verwiesen wird. Es zeigen:
- Fig. 1: im Querschnitt die Verbindung einer Rotorwelle mit einer Rotornabe und dem Getriebe im Ausschnitt;
- Fig. 2: in einer Detailansicht den Verbindungsübergang der Rotorwelle mit dem Getriebe;
- Fig. 3a: die Flanschverbindung von Rotornabe mit der Rotorwelle in einer Detailansicht;
- Fig. 3b: die Ansicht auf eine Flanschverbindung der Rotornabe mit geschnittener Rotorwelle;
- Fig. 4a-4d: jeweils Ansichten von Kreissegmentzwischenkörpern in Ansichtsdarstellung und
- Fig. 5: eine Detailansicht eines Verbindungsübergangs der Rotorwelle mit dem Getriebe gemäß einer weiteren Ausführungsform.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

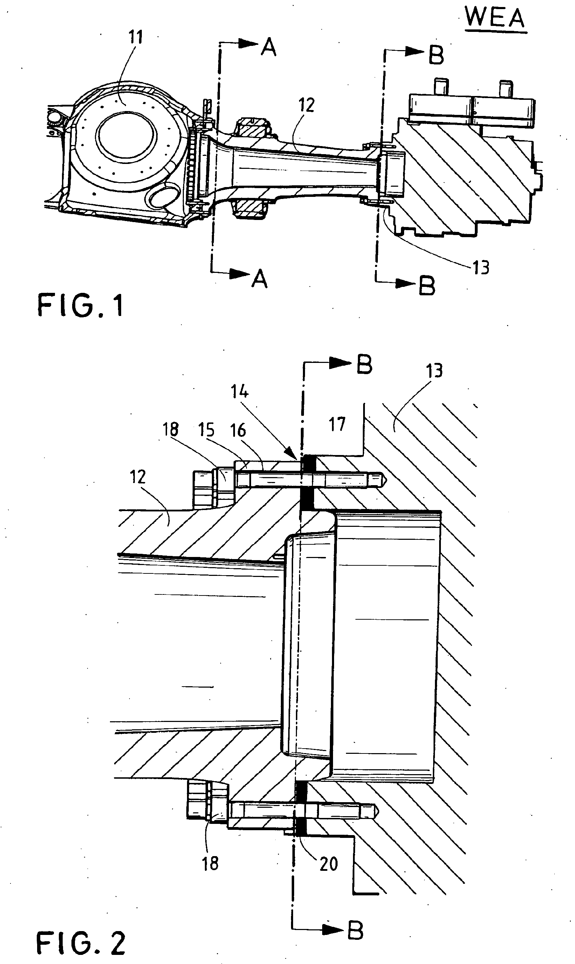

Fig. 1 zeigt im Querschnitt die verbundene Anordnung einer Rotornabe 11 mit einer Rotorwelle 12 und einem Verbindungsteil 13 eines entsprechenden Getriebes einer Windenergieanlage. Die Rotornabe 11, die Rotorwelle 12 und das im Schnittbild nicht weiter detaillierte Getriebe, welches im vorderen Bereich das Verbindungsteil 13 aufweist, sind Teile einer schematisch bezeichneten Windenergieanlage WEA.

Wie aus der Detailansicht in Fig. 2 hervorgeht, ist die Rotorwelle 12 mit dem Verbindungsteil 13 des Getriebes mittels einer Flanschverbindung 14 verbunden. Hierzu weist die Rotorwelle 12 an dem dem Verbindungsteil 13 zugewandten Ende einen Flanschring 15 auf, der über entsprechende Bohrungen 16 zur Aufnahme von Schrauben verfügt. Die Bohrungen 16 sind regelmäßig über den Umfang des Flanschringes 15 angeordnet. Das Verbindungsteil 13 des Getriebes weist auf der der Rotorwelle 12 zugewandten Seite korrespondierende Sacklochbohrungen 17 auf, die entsprechende Gewinde besitzen. Von der Rotorwellenseite werden Schrauben 18 mit Gewinde in die Bohrungen 16 der Rotorwelle 12 und die Bohrungen 17 des Verbindungsteils 13 eingebracht, so dass die Rotorwelle 12 mit dem Verbindungsteil 13 unter Ausbildung einer Vorspannung verbunden wird.

Zwischen dem Ende der Rotorwelle 12 und dem Ende des Verbindungsteils 13, das der Rotorwelle 12 gegenüber angeordnet ist, sind im Bereich der Bohrungen 16, 17 Verbindungszwischenkörper 20 angeordnet, die sich lösbar zwischen der Rotorwelle 12 und dem Verbindungsteil 13 befinden. Die Verbindungszwischenkörper 20 sind gemäß der Erfindung mit einer härteren Kontaktfläche als die Kontaktflächen der Rotorwelle 12 und des Verbindungsteils 13 zu beiden Seiten der Rotorwelle 12 und des Verbindungsteils 13 versehen, so dass durch Anziehen der Schrauben 18 der Reibwert und der Reibschluss zwischen der Rotorwelle 12 und dem Verbindungsteil 13 erhöht wird bzw. ist.

Bei einer Demontage, d.h. Lösen der Verbindung zwischen der Rotorwelle 12 und dem Verbindungsteil 13 durch Herausdrehen der Schrauben 18, ist es möglich, dass die Verbindungszwischenkörper 20 an der lösbaren Verbindung zwischen den beiden Bauteilen manuell entfernt werden können. Die Kontaktflächen der Rotorwelle 12 und des Verbindungsteils 13, die einander gegenüberliegen, sind vorzugsweise glatt. Typischerweise sind die Enden der Rotorwelle 12 und des Verbindungsteils 13 im Durchmesser größer als 0,5 m.

Alternativ kann die Verbindung Rotorwelle 12 zum Verbindungsteil 13 auch ohne Verbindungszwischenkörper ausgeführt werden. Dies bietet sich insbesondere an, wenn das Verbindungsteil 13 als geschmiedeter Planetenträger mit gehärteter Kontaktfläche ausgebildet ist. Die Welle kann dann z.B. aus EN-GJS 400 gegossen sein. Alternativ kann natürlich auch die Welle gehärtet sein, insbesondere wenn sie als Schmiedeteil ausgeführt ist.

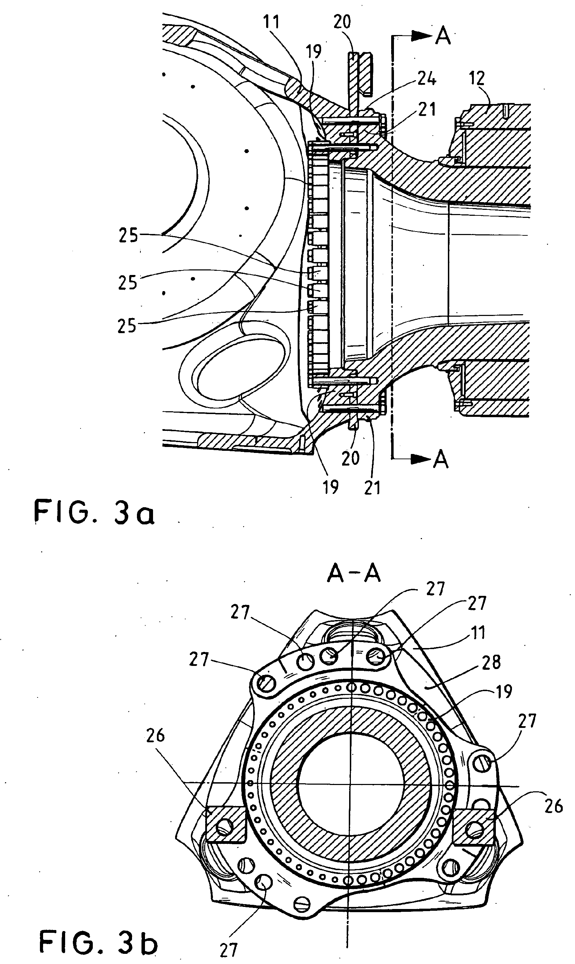

In Fig. 3a ist weiterhin eine Detailansicht der Verbindung zwischen der Rotorwelle 12 und der Rotornabe 11 (vgl. Fig. 1) im Querschnitt dargestellt. Hierzu verfügt die Rotornabe 11 an ihrer Innenseite über einen Flanschring 19 mit entsprechenden Bohrungen, in die Bolzen bzw. Schrauben eingesetzt werden und mit der Stirnseite der Rotorwelle 12 verbunden werden. Dazu sind an der Rotorwelle 12 entsprechende Sacklochbohrungen zur Aufnahme der Schrauben bzw. Bolzen vorgesehen.

Die Schrauben bzw. Bolzen werden von der Innenseite der Rotornabe 11 eingesetzt und mit der Rotorwelle 12 verbunden. Weiterhin ist zur Ausbildung einer wechselseitigen Flanschverbindung an der Rotorwelle 12 ein Flanschring 21 mit entsprechenden Bohrungen zur Aufnahme von Bolzen bzw. Schrauben vorgesehen. Hierbei werden von der der Rotornabe 11 abgewandten Seite die Bolzen in die Bohrungen des Flanschringes 21 eingesetzt, so dass die Bolzen bzw. Schrauben entsprechend ausgebildete (Sackloch- oder Durchgangs-)Bohrungen an der Rotornabe 11 durchdringen, wodurch die Bolzen der äußeren Reihe des Flanschringes 21 entgegen den Bolzen der inneren Reihe des Flanschringes 19 der Rotornabe 11 angeordnet sind. Hierbei ist der Lochkreis der Bohrungen des Flanschrings 21 größer als der Lochkreis der Bohrungen des Flanschringes 19.

Insgesamt wird dadurch eine zweireihige Schraubenflanschverbindung der beiden mechanisch hochbelasteten Bauteile ermöglicht, wobei die Montage dadurch erfolgt, dass die Rotornabe und die Rotorwelle zueinander ausgerichtet werden, anschließend die Verschraubung der Reihe von Bolzen am außen liegenden Flanschring 21 der Rotorwelle 12 erfolgt und danach die Verbindungselemente in Form von Bolzen oder Schrauben im Inneren der Rotornabe 11 am innen liegenden Flanschring 19 verschraubt werden. Anschließend werden die Bolzen bzw. Schrauben mit einer vorbestimmten Vorspannkraft verspannt. Hierdurch wird eine robuste Flanschverbindung der Rotornabe 11 mit der Rotorwelle 12 ermöglicht.

Durch Hülsen 25 unter den Schraubenköpfen der inneren Schraubenreihe ist es möglich, zwecks Standardisierung einheitliche Schraubenlängen zu verwenden. Auf dem äußeren Flanschring 21 ist eine Spur 24 angeordnet, die als Kontaktbahn für einen (nicht dargestellten) Blitzableiter fungiert.

Um eine reibwerterhöhte Verbindung zwischen der Rotornabe 11 und der Rotorwelle 12 auszubilden, sind Verbindungszwischenbauteile 20 in Form einer Arretierscheibe vorgesehen. Die Oberflächen der Kontaktflächen zu Rotornabe 11 und Rotorwelle 12 sind härter als die Kontaktflächen von Rotornabe 11 und Rotorwelle 12 ausgeführt, so dass der Reibschluss bei Verspannung der Bolzenreihe an den Flanschringen 19, 21 zu einem besseren Reibwert führt. Alternativ kann die Flanschverbindung auch ohne Verbindungszwischenbauteile 20 ausgebildet sein, indem die Oberfläche der Kontaktfläche der Rotorwelle 12 härter als die Kontaktfläche der Rotornabe 11 ausgebildet wird. Dies bietet sich insbesondere dann an, wenn die Rotornabe 11 als Gussbauteil und die Rotorwelle 12 als Schmiedebauteil aus Vergütungsstahl ausgeführt ist

Durch die erfindungsgemäße Verbindung von großvolumigen Bauteilen einer Windenergieanlage mit oder ohne Verbindungszwischenbauteilen mit härteren Oberflächen zu beiden Seiten der zu verbindenden Bauteile, Rotornabe 11 und Rotorwelle 12, wird eine Anordnung zum Verhindern von Relativbewegungen zwischen den gegeneinander verspannten, reibschlüssig zusammenwirkenden Bauteilen (Rotornabe 11 und Rotorwelle 12) erreicht.

Insbesondere handelt es sich bei der Rotornabe 11 um ein Bauteil aus Gusswerkstoff, z.B. Kugelgraphitguss, oder aus einfachem Baustahl, wobei die Kontaktfläche des Flanschringes 20 zur Rotorwelle bevorzugt mechanisch glatt, z.B. RZ 16, bearbeitet worden ist.

Darüber hinaus ist die Rotorwelle 12 als zweites Bauteil als Stahlbauteil (Baustahl oder Vergütungsstahl) oder als Gussbauteil mit einer härteren Oberfläche der Kontaktfläche als die Kontaktfläche der Rotornabe 11 ausgeführt. Bevorzugt wird die Oberfläche der Kontaktfläche mit scharfkantigem Strahlgut sandgestrahlt, z.B. sandgestrahlt in der Qualität SA 3, und danach durch z.B. thermophysikalische Verfahren (z.B. Flammhärten oder Induktionshärten) oder durch thermochemische Verfahren (z.B. Langzeit-Gasnitrocarborieren) gehärtet. Hierbei wird beispielsweise eine Härte von mindestens 400 HV (Vickershärte), bevorzugt größer als 550 HV, erreicht. Die Dichte der Härteschicht sollte hierbei etwa 0,6 mm oder größer sein.

Die durch die Verbindungselemente bzw. Bolzen aufgebrachte Vorspannung zwischen der Rotorwelle 12 und der Rotornabe 11 sollte an den Kontaktflächen Flächenpressungen im Bereich von 60 bis 220 N/mm², vorzugsweise zwischen 90 und 200 N/mm², erreichen. Hierdurch lassen sich Reibwerte der Verbindung von der Rotorwelle mit der Rotornabe oberhalb von 0,4, vorzugsweise oberhalb von 0,5, auf sehr kostengünstige und zuverlässige Weise realisieren.

In Fig. 3b ist weiterhin die Ansicht auf den Flanschring 19 der Rotornabe 11 dargestellt. Hieraus ist zu ersehen, dass die Bohrungen des Flanschringes 19 kreisförmig angeordnet sind, wobei der Anschlussbereich der Rotornabe 11 zur Rotorwelle am Flanschring 19 einen Durchmesser von mehr als 0,5 m im Allgemeinen aufweist.

Aus den Figuren 3a und 3b ist weiterhin zu ersehen, dass die Verbindungszwischenkörper 20 gleichzeitig als Arretierscheibe für eine Rotorarretierung genutzt werden. Die Arretierscheibe besteht aus drei identischen Segmenten, die als Verbindungszwischenkörper 20 ausgeführt sind. Die Arretierung erfolgt über zwei Arretiervorrichtungen 26, bei denen nicht dargestellte Bolzen durch die Bolzenaufnahmen 27 geschoben werden. Insgesamt 12 Bolzenaufnahmen 27 sind so positioniert, dass jedes Rotorblatt in vertikaler und horizontaler Position arretierbar ist. Die drei Ausnehmungen 28 in der Arretierscheibe ermöglichen dem Wartungspersonal einen Durchstieg in die Rotornabenverkleidung. Besonders wirtschaftlich ist es, wenn die Arretierscheibe aus Reststücken der Maschinenrahmenfertigung gefertigt werden.

Die Rotornabenverkleidung (nicht dargestellt) wird bevorzugt an den Zwischenelementen 20 befestigt, um nicht den Kraftfluss in der Rotornabe durch zusätzliche Befestigungen (Angüsse) zu stören.

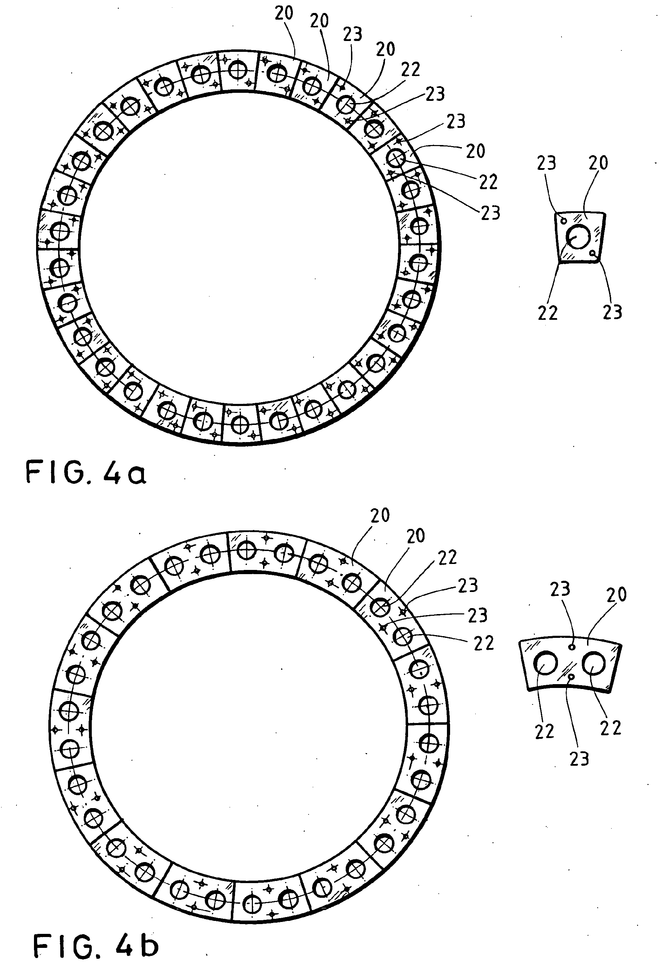

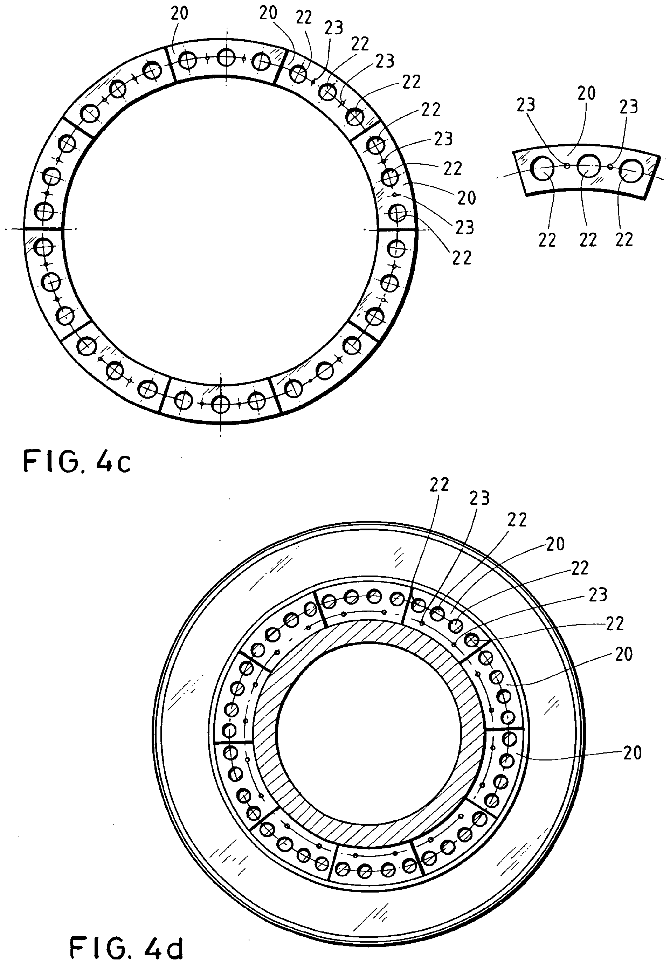

In den Figuren 4a bis 4d sind verschiedene Ausführungen der Anordnung von Verbindungszwischenkörpern 20 an einem Bauteil bzw. an einem Flansch eines Bauteils in einer Ansicht dargestellt, wobei in den Figuren 4a bis 4c im linken Bereich jeweils eine kreisförmige Anordnung der Verbindungszwischenkörper 20 und im rechten Bereich der Figuren jeweils einer Einzelansicht der Verbindungszwischenkörper 20 dargestellt ist.

Mittels der beidseitig zu den Kontaktflächen von Bauteilen härteren Kontaktflächen der Verbindungszwischenkörper 20 zwischen den Kontaktflächen von zwei Bauteilen, insbesondere den Kontaktflächen von einer Flanschverbindung zwischen den Bauteilen, wird eine Art segmentierter Ring aus den Verbindungszwischenkörpern 20 gebildet. Die Verbindungszwischenkörper 20 sind als Teilsegment einer kreisförmigen Anordnung ausgebildet.

Anordnung ausgebildet.

Die Verbindungszwischenkörper 20 können ein oder mehrere Durchgangslöcher 22 aufweisen, so dass die Verbindungszwischenkörper 20 von Bolzen oder Schrauben einer Flanschverbindung zwischen zwei zu verbindenden Bauteilen durchsetzt werden. Darüber hinaus verfügen die Verbindungszwischenkörper 20 über kleinere Bohrungen 23, so dass Montierelemente in Form von versenkten Schrauben die Bohrungen 23 durchsetzen, wodurch beispielsweise eine Montage der Verbindungszwischenkörper 20 auf einem Flanschring ermöglicht bzw. vereinfacht wird.

Hierdurch können durch Einbringen von Schrauben oder anderen Montierelementen in die Bohrungen die Verbindungszwischenkörper 20 an den Kontaktflächen der Bauteile montiert werden, wobei vorzugsweise die Kontaktflächen entsprechend Sacklochbohrungen zur Aufnahme von Gewinden aufweisen.

Im Rahmen der Erfindung ist es weiterhin möglich, dass an den Verbindungszwischenkörpern 20 entsprechende Fixierungseinrichtungen oder Positioniereinrichtungen zur Fixierung bzw. Anordnung der Verbindungszwischenkörper 20 an einem Bauteil bzw. an einem Flansch eines Bauteils vorgesehen sind.

Dadurch, dass zwischen einem ersten und dritten Bauteil (11, 13) ein zweites Bauteil (Fig. 2) vorgesehen ist, das auf seinen Kontaktflächen zu dem ersten und dem dritten Bauteil (11, 13) eine höhere Härte aufweist, kann das zweite harte Bauteil (20) plattenförmig bzw. als eine Art Zwischenelement bzw. Zwischenverbindungsteil mit Verbindungszwischenkörpern ausgeführt sein. Dadurch lassen sich die Kosten für eine Härtung der Oberflächen der Bauteile (11, 13) minimieren. Je nach Härtungsverfahren ist es hierbei vorteilhaft, die Größe der Verbindungszwischenkörper durch eine Segmentierung zu begrenzen. Insbesondere bei Ringflanschverbindungen sind die Verbindungszwischenkörper bevorzugt als Kreisringelemente ausgeführt.

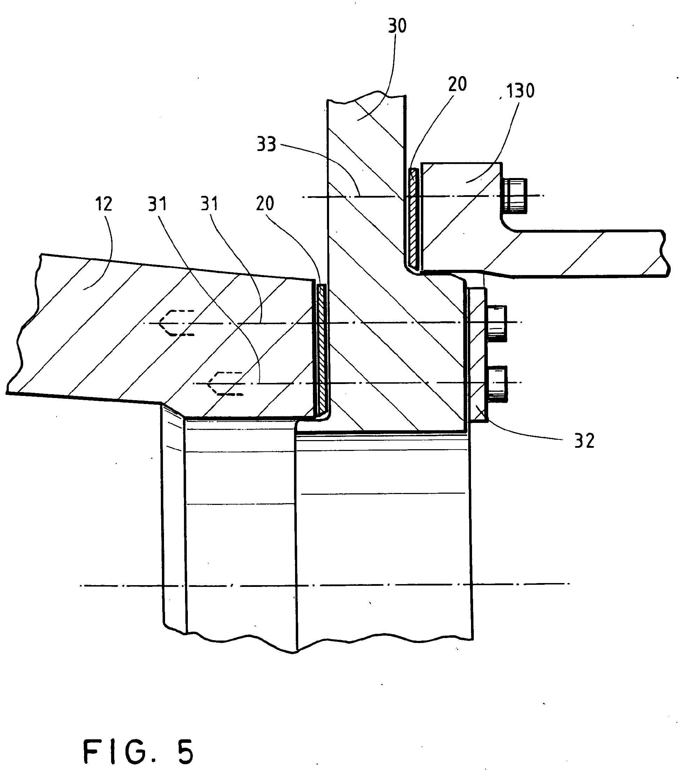

Fig. 5 zeigt ein weiteres Ausführungsbeispiel einer Verbindung von einer Rotorwelle 12 mit einem Getriebeflansch 130 eines nicht weiter dargestellten Getriebes entsprechend der in Fig. 2 gezeigten Ausführung. Hierbei ist zwischen der Rotorwelle 13 und dem Getriebeflansch 130 eine Arretierscheibe 30 angeordnet, die sowohl Kontaktflächen zu der Rotorwelle 12 und dem Getriebeflansch 130 aufweist.

Um die Verbindung zwischen der Rotorwelle 12 und der Arretierscheibe 30 bzw. zwischen der Rotorwelle 12 und dem Getriebeflansch 130 in ihrer Festigkeit zu verbessern, sind zwischen der Rotorwelle 12 und der Arretierscheibe 130 Verbindungszwischenkörper 20, die mit einer Beschichtung auf der Oberfläche versehen sind, angeordnet. Ferner ist die Arretierscheibe 30 mit Durchgangslöchern versehen, so dass schematisch eingezeichnete Schrauben 31, die an der Getriebeflanschseite eingesetzt werden, einen Unterlegring 32, die Arretierscheibe 30 und die vorgesehenen Durchgangslöcher der Verbindungszwischenkörper 20 durchsetzen und in Sacklochbohrungen der Rotorwelle 12 münden. Durch den Unterlegring 32 wird eine bessere Lastverteilung erreicht.

Weiterhin sind zwischen der Arretierscheibe 30 und dem Getriebeflansch 130 Verbindungszwischenkörper 20 angeordnet, sodass der Getriebeflansch 130 und die Arretierscheibe 30 mit schematisch eingezeichneten Schrauben 33 verbunden werden. Bei den Verbindungszwischenkörper 20 handelt es sich um erfindungsgemäß gehärtete und/oder beschichtete Verbindungszwischenkörper 20, so dass sich verbesserte kraftschlüssige Verbindungen mit höheren Reibschlüssen ergeben.

Bei der in Fig. 5 gezeigten Ausführungsform handelt es sich um die mehrfache Kombination oder eine Hintereinanderschaltung von mehreren erfindungsgemäßen Verbindungen.

### Bezugszeichenliste

- 11: Rotornabe
- 12: Rotorwelle
- 13: Verbindungsteil (Getriebe)
- 14: Flanschverbindung
- 15: Flanschring
- 16: Bohrung
- 17: Bohrung
- 18: Schrauben
- 19: Flanschring
- 20: Verbindungszwischenkörper
- 21: Flanschring
- 22: Bohrung
- 23: Bohrung
- 24: Spur
- 25: Hülse
- 26: Arretiervorrichtung
- 27: Bolzenaufnahme
- 28: Ausnehmung
- 30: Arretierscheibe
- 31: Schrauben
- 32: Unterlegring
- 33: Schrauben
- 130: Getriebeflansch

- WEA: Windenergieanlage

## Patentansprüche

1. Verbindung von Bauteilen (11, 12, 13) einer Windenergieanlage (WEA) mit einem Durchmesser von mehr als 0,5 m, vorzugsweise mehr als 1,0 m, weiter vorzugsweise mehr als 1,5 m, wobei zwei miteinander zu verbindende Bauteile (11, 12, 13) jeweils einander zugewandte Kontaktflächen aufweisen und im verbundenen Zustand die Bauteile (11, 12, 13) miteinander verspannt sind oder werden, **dadurch gekennzeichnet, dass** ein zweites Bauteil als Zwischenverbindungsteil (20) zwischen dem ersten Bauteil (11, 12, 13) und einem dritten Bauteil (11, 12, 13) angeordnet ist oder wird, wobei eine kraftschlüssige Verbindung zwischen dem ersten und dem dritten Bauteil mit dem dazwischen angeordneten zweiten Bauteil ausgebildet ist, wobei die Oberflächen der Kontaktflächen des zweiten Bauteils jeweils eine höhere Härte und Rauigkeit als die Oberflächen der den Kontaktflächen des zweiten Bauteils gegenüberliegenden Kontaktflächen des ersten und des dritten Bauteils (11, 12, 13) aufweisen, wobei die Oberflächen der Kontaktflächen des ersten und des dritten Bauteils (11, 12, 13) der Windenergieanlage (WEA) weicher sind als die Oberflächen der Kontaktflächen des zweiten Bauteils der Windenergieanlage (WEA), wobei die Oberflächen der Kontaktflächen des zweiten Bauteils gehärtet sind.

2. Verbindung nach Anspruch 1, **dadurch gekennzeichnet, dass** das erste Bauteil (11, 12, 13) und das dritte Bauteil (11, 12, 13) mittels einer Flanschverbindung oder eines Flansches miteinander verbunden sind.

3. Verbindung nach Anspruch 1 oder 2, **dadurch gekennzeichnet, dass** durch Verbindungselemente (18), vorzugsweise Schrauben, das erste und das dritte Bauteil vorgespannt sind oder werden.

4. Verbindung nach Anspruch 3 **dadurch gekennzeichnet, dass** das Zwischenverbindungsteil (20) von den Verbindungselementen (18) durchsetzt ist oder wird.

5. Verbindung nach einem der Ansprüche 1 bis 4, **dadurch gekennzeichnet, dass** das Zwischenverbindungsteil (20) aus mehreren, insbesondere plattenförmig oder klötzchenartig ausgebildeten, Verbindungszwischenkörpern (20) besteht oder diese aufweist.

6. Verbindung nach Anspruch 5, **dadurch gekennzeichnet, dass** die Verbindungszwischenkörper (20) bei oder durch Anordnung zwischen dem ersten und dem dritten Bauteil (11, 12, 13) eine Art segmentierten Ring, insbesondere segmentierten Kreisring, oder Teile davon bilden.

7. Verbindung nach Anspruch 5 oder 6, **dadurch gekennzeichnet, dass** die Verbindungszwischenkörper (20) mit dem ersten und/oder dem dritten Bauteil mechanisch mittels Montierelementen, insbesondere Schrauben oder Stifte oder Klammern oder dergleichen, verbunden sind oder werden.

8. Verbindung nach einem der Ansprüche 1 bis 7, **dadurch gekennzeichnet, dass** die Kontaktflächen des ersten und/oder des zweiten Bauteils (11, 12, 13) und/oder des dritten Bauteils (11, 12, 13) ringartig und/oder geschlossen ausgebildet oder angeordnet sind.

9. Verbindung nach einem der Ansprüche 1 bis 8, **dadurch gekennzeichnet, dass** die Verbindung einen Reibwert von mehr als 0,4, vorzugsweise mehr als 0,5, insbesondere mehr als 0,6, aufweist.

10. Verbindung nach einem der Ansprüche 1 bis 9, **dadurch gekennzeichnet, dass** das erste Bauteil (11, 12, 13) als Rotorwelle (11) ausgebildet ist.

11. Verbindung nach einem der Ansprüche 1 bis 10, **dadurch gekennzeichnet, dass** das dritte Bauteil (11, 12, 13) als Rotornabe (11) oder als Getriebeeingangswelle (13) ausgebildet ist.

12. Verbindung nach einem der Ansprüche 1 bis 9, **dadurch gekennzeichnet, dass** das erste Bauteil (11, 12, 13) als Maschinenrahmen oder Rohrturm ausgebildet ist.

13. Verbindung nach einem der Ansprüche 1 bis 9 oder 12, **dadurch gekennzeichnet, dass** das dritte Bauteil (11, 12, 13) als Drehlager, das auf dem Rohrturm angeordnet ist oder wird, ausgebildet ist.

14. Verbindung nach einem der Ansprüche 1 bis 13, **dadurch gekennzeichnet, dass** die Verbindung als kraftschlüssige, querkraftbelastete und/oder torsionsbelastete Verbindung oder Schraubverbindung ausgebildet ist.

15. Verbindung nach einem der Ansprüche 1 bis 14, **dadurch gekennzeichnet, dass** es sich bei dem ersten oder dritten Bauteil (11, 12, 13) um ein Gussbauteil handelt.

16. Verwendung oder Anordnung von Bauteilen (11, 12, 13) bei wenigstens einer Verbindung einer Windenergieanlage (WEA) nach einem der Ansprüche 1 bis 15.

17. Verfahren zum Herstellen einer Verbindung von Bauteilen (11, 12, 13) einer Windenergieanlage (WEA), wobei eine Verbindung nach einem der Ansprüche 1 bis 15 ausgebildet wird.

18. Windenergieanlage (WEA) mit einer Verbindung nach einem der Ansprüche 1 bis 15.

## Claims

1. Connection of components (11, 12, 13) of a wind energy installation (WEA) with a diameter of more than 0.5 m, preferably more than 1.0 m, more preferably more than 1.5 m, wherein two components (11, 12, 13) to be connected together each have facing contact surfaces and the components (11, 12, 13) are or become braced together in the connected state, **characterized in that** a second component is or becomes arranged as an intermediate connection part (20) between the first component (11, 12, 13) and a third component (11, 12, 13), wherein a frictional connection is formed between the first and the third component with the second component arranged therebetween, wherein the surfaces of the contact surfaces of the second component, respectively, have a higher hardness and roughness than the surfaces of the contact surfaces of the first and the third component (11, 12, 13) located opposite to the contact surfaces of the second component, wherein the surfaces of the contact surfaces of the first and the third component (11, 12, 13) of the wind energy installation (WEA) are softer than the surfaces of the contact surfaces of the second component of the wind energy installation (WEA), wherein the surfaces of the contact surfaces of the second component are hardened.

2. The connection according to claim 1, **characterized in that** the first component (11, 12, 13) and the third component (11, 12, 13) are connected with each other by means of a flange connection or a flange.

3. The connection according to claim 1 or 2, **characterized in that** the first and the third component are or become preloaded by means of connection elements (18), preferably screws.

4. The connection according to claim 3, **characterized in that** the intermediate connection part (20) is or becomes penetrated by the connection elements (18).

5. The connection according to any one of the claims 1 to 4, **characterized in that** the intermediate connection part (20) is made up of or has several intermediate connection bodies (20), in particular plate-like or block-like intermediate connection bodies (20).

6. The connection according to claim 5, **characterized in that** the intermediate connection bodies (20) form a type of segmented ring, in particular a segmented circular ring, or portions thereof, when or by being arranged between the first and the third component (11, 12, 13).

7. The connection according to claim 5 or 6, **characterized in that** the intermediate connection bodies (20) are or become mechanically connected with the first and/or the third component by means of mounting elements, in particular screws or pins or clamps or similar.

8. The connection according to any one of the claims 1 to 7, **characterized in that** the contact surfaces of the first and/or the second component (11, 12, 13) and/or the third component (11, 12, 13) are formed or arranged in a ring-like manner and/or a closed manner.

9. The connection according to any one of the claims 1 to 8, **characterized in that** the connection has a friction coefficient of more than 0.4, preferably more than 0.5, in particular more than 0.6.

10. The connection according to any one of the claims 1 to 9, **characterized in that** the first component (11, 12, 13) is formed as a rotor shaft (11).

11. The connection according to any one of the claims 1 to 10, **characterized in that** the third component (11, 12, 13) is formed as a rotor hub (11) or as a gear input shaft (13).

12. The connection according to any one of the claims 1 to 9, **characterized in that** the first component (11, 12, 13) is formed as a machine frame or as a tubular tower.

13. The connection according to any one of the claims 1 to 9 or 12, **characterized in that** the third component (11, 12, 13) is formed as a pivot bearing, which is or becomes arranged on the tubular tower.

14. The connection according to any one of the claims 1 to 13, **characterized in that** the connection is formed as a force-fit, transverse force-loaded and/or torsion-loaded connection or screw connection.

15. The connection according to any one of the claims 1 to 14, **characterized in that** the first or third component (11, 12, 13) is a casting component.

16. Use or arrangement of components (11, 12, 13) for at least one connection of a wind energy installation (WEA) according to any one of the claims 1 to 15.

17. A method of establishing a connection of components (11, 12, 13) of a wind energy installation (WEA), wherein a connection according to any one of the claims 1 to 15 is formed.

18. A wind energy installation (WEA) with a connection according to any one of the claims 1 to 15.

## Revendications

1. Assemblage de composants (11, 12, 13) d'une éolienne (EOL) présentant un diamètre supérieur à 0,5 m, de préférence supérieur à 1,0 m, plus préférablement supérieur à 1,5 m, dans lequel deux composants (11, 12, 13) à assembler l'un à l'autre présentent respectivement des faces de contact tournées les unes vers les autres et les composants (11, 12, 13) sont, dans l'état assemblé, assemblés par serrage les uns aux autres, **caractérisé en ce qu'**un deuxième composant est disposé en tant que partie de composant intermédiaire (20) entre le premier composant (11, 12, 13) et un troisième composant (11, 12, 13), dans lequel un assemblage à force entre le premier et le troisième composant est réalisé avec le deuxième composant intercalé entre ces derniers, dans lequel les surfaces des faces de contact du deuxième composant présentent respectivement une dureté et une rugosité plus importantes que les surfaces des faces de contact, faisant face aux faces de contact du deuxième composant, du premier et du troisième composant (11, 12, 13), dans lequel les surfaces des faces de contact du premier et du troisième composant (11, 12, 13) de l'éolienne (EOL) sont plus souples que les surfaces des faces de contact du deuxième composant de l'éolienne (EOL), dans lequel les surfaces des faces de contact du deuxième composant sont durcies.

2. Assemblage selon la revendication 1, **caractérisé en ce que** le premier composant (11, 12, 13) et le troisième composant (11, 12, 13) sont assemblés l'un à l'autre au moyen d'un assemblage par bride ou d'une bride.

3. Assemblage selon la revendication 1 ou 2, **caractérisé en ce que** le premier et le troisième composant sont précontraints par des éléments d'assemblage (18), de préférence des vis.

4. Assemblage selon la revendication 3, **caractérisé en ce que** la partie d'assemblage intermédiaire (20) est traversée par les éléments d'assemblage (18).

5. Assemblage selon l'une quelconque des revendications 1 à 4, **caractérisé en ce que** la partie d'assemblage intermédiaire (20) est constituée de plusieurs corps intermédiaires d'assemblage (20), en particulier réalisés de manière à présenter une forme de plaque ou à la manière de cales ou présente ces derniers.

6. Assemblage selon la revendication 5, **caractérisé en ce que** les corps intermédiaires d'assemblage (20) forment, lors de l'agencement ou du fait de l'agencement entre le premier et le troisième composant (11, 12, 13), une sorte de bague segmentée, en particulier une bague circulaire segmentée ou des parties de cette dernière.

7. Assemblage selon la revendication 5 ou 6, **caractérisé en ce que** les corps intermédiaires d'assemblage (20) sont assemblés au premier et/ou au troisième composant de manière mécanique au moyen d'éléments de montage, en particulier de vis ou de tiges ou d'attaches ou similaires.

8. Assemblage selon l'une quelconque des revendications 1 à 7, **caractérisé en ce que** les faces de contact du premier et/ou du deuxième composant (11, 12, 13) et/ou du troisième composant (11, 12, 13) sont réalisées ou disposées à la manière d'une bague et/ou de manière fermée.

9. Assemblage selon l'une quelconque des revendications 1 à 8, **caractérisé en ce que** l'assemblage présente une valeur de friction supérieure à 0,4, de préférence supérieure à 0,5, en particulier supérieure à 0,6.

10. Assemblage selon l'une quelconque des revendications 1 à 9, **caractérisé en ce que** le premier composant (11, 12, 13) est réalisé sous la forme d'un arbre de rotor (11).

11. Assemblage selon l'une quelconque des revendications 1 à 10, **caractérisé en ce que** le troisième composant (11, 12, 13) est réalisé sous la forme d'un moyeu de rotor (11) ou sous la forme d'un arbre d'entrée de transmission (13).

12. Assemblage selon l'une quelconque des revendications 1 à 9, **caractérisé en ce que** le premier composant (11, 12, 13) est réalisé sous la forme d'un bâti de machine ou d'un mât tubulaire.

13. Assemblage selon l'une quelconque des revendications 1 à 9 ou 12,
**caractérisé en ce que** le troisième composant (11, 12, 13) est réalisé sous la forme d'un palier rotatif, qui est disposé sur le mât tubulaire.

14. Assemblage selon l'une quelconque des revendications 1 à 13, **caractérisé en ce que** l'assemblage est réalisé sous la forme d'un assemblage à force, contraint par une force transversale et/ou contraint par une torsion ou sous la forme d'un assemblage vissé.

15. Assemblage selon l'une quelconque des revendications 1 à 14, **caractérisé en ce que** le premier ou le troisième composant (11, 12, 13) est un composant en fonte.

16. Utilisation ou agencement de composants (11, 12, 13) dans le cadre d'au moins un assemblage d'une éolienne (EOL) selon l'une quelconque des revendications 1 à 15.

17. Procédé servant à réaliser un assemblage de composants (11, 12, 13) d'une éolienne (EOL), dans lequel un assemblage est réalisé selon l'une quelconque des revendications 1 à 15.

18. Eolienne (EOL) avec un assemblage selon l'une quelconque des revendications 1 à 15.
